# DEMANDE DE BREVET EUROPEEN

(11) **EP 2 333 431 A2**
(43) Date de publication de la demande: **15.06.2011**
(21) Numéro de dépôt: 10306170.1
(22) Date de dépôt: 26.10.2010
(51) Int. Cl.: F24D 3/18, F24D 11/02, F24D 1/00

(54) **Installation pour la récupération de l'énergie contenue dans de l'air vicié, en particulier celui extrait des cuisines professionnelles**

(30) Priorité: 19.11.2009 FR 0958184
(71) Demandeur: France Air, 01700 Beynost (FR); Air Processing Components, 69530 Brignais (FR)
(72) Inventeur: Minssieux, Frédéric, 69530 Brignais (FR); Cachot, Lionel, 69400 Villefranche sur Saone (FR)
(74) Mandataire: Denjean, Eric

(57) **Abrégé**

Installation pour la récupération de l'énergie contenue dans l'air vicié, en particulier celui extrait des cuisines professionnelles, caractérisée en ce qu'elle comprend successivement :
- un premier échangeur (2) air/liquide comprimé basse pression apte à assurer la condensation de l'air chargé en graisse et le transfert de calories au liquide comprimé basse pression,
- un second échangeur (3) assurant la transformation du gaz comprimé haute pression en liquide comprimé haute pression et le transfert de calories à un fluide caloporteur circulant dans un troisième échangeur,
- un troisième échangeur (4) assurant le transfert de calories provenant du fluide caloporteur circulant dans le second échangeur (3) à un fluide caloporteur circulant dans un circuit indépendant.

## Description

L'invention a pour objet une installation pour la récupération de l'énergie contenue dans l'air vicié, en particulier celui extrait des cuisines professionnelles sans pour autant que ce soit limitatif Elle a dans ce cas également l'avantage d'assurer la dépollution des fumées, en termes d'odeur et de contenu en graisse.

L'invention s'applique plus généralement à tous les domaines dans lesquels de l'air chaud vicié est généré. A titre d'exemple, on peut citer les machines outils utilisées dans l'industrie générant des fumées ou de l'air chargé en huile. On peut également citer les laveuses industrielles rejetant de l'air chaud humide. Plus largement, dans la suite de la description, par « air vicié », on désigne de l'air chaud humide contenant ou non des agents polluants du type graisse, huile, COV (composés organiques volatiles) et/ou particules en suspension de toute sorte.

Dans la suite de la description, l'invention est plus particulièrement décrite en relation avec le domaine des cuisines professionnelles.

De nombreuses solutions sont actuellement proposées pour le traitement des fumées de cuisine professionnelles chargées en graisse. La plus simple et la plus ancienne consiste à filtrer l'air au travers d'un filtre à choc avec charbon actif agencé dans la hotte d'extraction. Cette solution n'est pas satisfaisante dans la mesure où le filtre est rapidement saturé. Il faut alors procéder à son nettoyage, ou de manière plus radicale, à son changement. En outre, aucun recyclage de l'air n'est autorisé et il n'y a aucune récupération de calories possible.

En d'autres termes, le problème que se propose de résoudre l'invention est de mettre au point une installation permettant de récupérer des calories à partir de l'air vicié extrait, en particulier dans les cuisines professionnelles, tout en assurant parallèlement le traitement des fumées chargées en graisse.

Pour ce faire, les Demandeurs ont mis au point un système de pompe à chaleur muni d'un évaporateur spécifique, en l'espèce un évaporateur tubulaire du type air/liquide compressé, apte à assurer une captation et un piégeage efficace des graisses, les calories récupérées étant réutilisées pour le chauffage par exemple d'un ballon d'eau chaude sanitaire.

Plus précisément, l'invention a pour objet une installation pour la récupération de l'énergie contenue dans l'air vicié, en particulier celui extrait des cuisines professionnelles, qui se caractérise en ce qu'elle comprend successivement :
- un dispositif de captage de l'air vicié,
- un premier échangeur air/liquide comprimé basse pression apte à assurer la condensation de l'air vicié et le transfert des calories au liquide comprimé basse pression, ledit premier échangeur se présentant sous la forme d'une cuve cylindrique renfermant un échangeur tubulaire se présentant sous la forme d'au moins un serpentin agencé à proximité de la paroi de la cuve, la cuve étant munie d'une entrée tangentielle, avantageusement en partie basse de l'air vicié et d'une sortie radiale, avantageusement en partie haute de l'air traité, l'échangeur étant connecté à ses deux extrémités à un circuit de fluide caloporteur circulant de l'extrémité supérieure à l'extrémité inférieure, le fluide passant de l'état liquide comprimé basse pression à l'état gaz comprimé basse pression,
- un compresseur assurant la transformation du gaz comprimé basse pression en gaz comprimé haute pression,
- un second échangeur assurant la transformation du gaz comprimé haute pression en liquide comprimé haute pression et le transfert de calories à un fluide caloporteur circulant dans un dispositif de chauffage,
- un détendeur assurant la transformation du liquide comprimé haute pression en liquide comprimé basse pression alimentant le premier échangeur.

Selon l'invention, le dispositif de chauffage récupérant les calories au niveau du second échangeur peut se présenter sous la forme d'une dalle chauffante, d'un plancher chauffant basse température, d'un système de préchauffage d'air ou encore d'un ballon d'eau chaude sanitaire.

Dans le cas du ballon d'eau chaude sanitaire, pour éviter tout risque de fuite du liquide caloporteur dans l'eau du ballon, on met en place un troisième échangeur assurant le transfert de calories provenant du fluide caloporteur circulant dans le second échangeur au fluide caloporteur alimentant le ballon d'eau chaude sanitaire. Même si le troisième échangeur n'est pas obligatoire dans les autres cas, il peut malgré tout faire partie de l'installation.

Ainsi, lorsque l'installation contient systémiquement un troisième échangeur, il s'agit d'un échangeur eau/eau ou eau/air en fonction de la nature du circuit indépendant raccordé sur ce troisième échangeur.

En pratique, le dispositif de captage de l'air vicié se présente sous la forme d'une hotte.

Selon l'invention, le fluide caloporteur circulant dans le premier échangeur est avantageusement un fluide frigorigène, par exemple de type R134A

Le fluide circulant à contre courant dans le second échangeur est de l'eau, de préférence de l'eau glycolée.

Selon une autre caractéristique, le 1^{er} échangeur présente, à son point bas, un moyen d'évacuation des condensats.

Selon un exemple particulier de réalisation, pour permettre l'extraction de l'air traité, le premier échangeur est raccordé sur un ventilateur d'extraction, sous la forme d'une tourelle ou d'un caisson.

Dans un mode de réalisation particulier, le premier échangeur contient plusieurs serpentins tubulaires concentriques, dont le nombre sera fonction de la puissance que l'on souhaite récupérer. En pratique, le nombre de serpentins est compris entre 1 et 3. En fonctionnement, la force centrifuge exercée sur l'air humide chargé en graisse circulant selon un mouvement ascendant dans le cylindre, entre la paroi et le serpentin, permet de séparer les particules solides, en l'espèce les graisses. Les particules sont alors récupérées sur la paroi du cylindre par écoulement de l'eau formée à l'issue du phénomène de condensation. Ce système permet ainsi d'éliminer les odeurs ainsi que les graisses. L'appareil permet également de déshumidifier l'air. Ce système permet ainsi de récupérer les calories se trouvant dans l'air extrait (tant en chaleur sensible qu'en chaleur latente).

Lorsque l'installation contient un troisième échangeur, le second échangeur est un échangeur eau/eau et permet de condenser le gaz comprimé haute pression provenant du compresseur et d'en échanger les calories avec un fluide, en l'espèce de l'eau circulant à contre courant par rapport au gaz comprimé. Il s'agit en pratique d'un échangeur à plaques. Il peut également se présenter sous la forme d'un échangeur coaxial.

Lorsque l'installation ne contient pas de troisième échangeur, le second échangeur est, en fonction de la nature du dispositif de chauffage, un échangeur eau/eau ou eau/air.

Le troisième échangeur lorsqu'il est présent permet d'échanger les calories du fluide provenant du second échangeur avec un fluide circulant, à contre courant, dans un circuit indépendant. Il peut s'agir d'un liquide alimentant un ballon d'eau chaude sanitaire. Il peut également s'agir d'un liquide caloporteur circulant dans une dalle chauffante, un plancher chauffant basse température. Dans ce cas là, l'échangeur est un échangeur eau/eau, tel que par exemple un échangeur à plaques. Il peut également s'agir d'air utilisé pour le préchauffage d'air. Dans ce cas là, le 3^{ème} échangeur sera sous la forme d'un échangeur air/eau)

De manière générale, l'installation de l'invention comprend une chaudière combustible (gaz, fuel, électrique) permettant d'assurer la relève du récupérateur d'énergie constitué du condenseur et de la pompe à chaleur, lorsque la puissance de ce dernier ne permet pas, d'atteindre la température de consigne. En pratique, le récupérateur assure la majeure partie de la montée en température, le complément à 100% étant fourni par la chaudière.

L'invention a également pour objet un procédé de récupération de l'énergie contenue dans l'air vicié, en particulier celui extrait des cuisines professionnelles, mettant en oeuvre l'installation précédemment décrite.

Selon ce procédé :
- on extrait l'air vicié au moyen du dispositif de captage,
- on condense l'air chaud dans le premier échangeur tout en échangeant ses calories avec le liquide basse pression circulant dans l'échangeur tubulaire,
- on évacue l'air traité
- parallèlement on compresse le gaz basse pression,
- au niveau du second échangeur, on condense le gaz haute pression obtenu tout en échangeant ses calories avec un fluide, en pratique de l'eau ou de l'air circulant à contre courant dans le dispositif de chauffage,
- on détend le liquide comprimé haute pression obtenu par condensation du gaz haute pression pour alimenter le premier échangeur en liquide comprimé basse pression,
- parallèlement, le cas échéant, on échange les calories entre le fluide circulant dans le troisième échangeur lorsqu'il est présent et le fluide circulant à contre courant provenant du second échangeur.

Toujours selon l'invention, le procédé met en oeuvre les paramètres suivants :
- la pression du liquide basse pression est comprise entre 2 bar et 6 bar,
- la pression du gaz haute pression est comprise entre 6 bar et 24 bar,
- la température de l'air vicié avant traitement est comprise entre 20 et 45°C,
- la température du liquide haute pression obtenu après condensation du gaz haute pression est en pratique comprise entre 20 °C et 65°C,
- la température du fluide circulant à contre courant dans le second échangeur est en pratique comprise entre 10 °C et 65°C,
- la température du fluide circulant dans le troisième échangeur lorsqu'il est présent, est en pratique comprise entre 10 °C et 65°C.

L'invention et les avantages qui en découlent ressortiront bien des exemples de réalisation suivants, à l'appui des figures annexées.
La figure 1 est une représentation schématique d'une installation type de l'invention.
La figure 2 est une vue éclatée du premier échangeur selon l'invention.

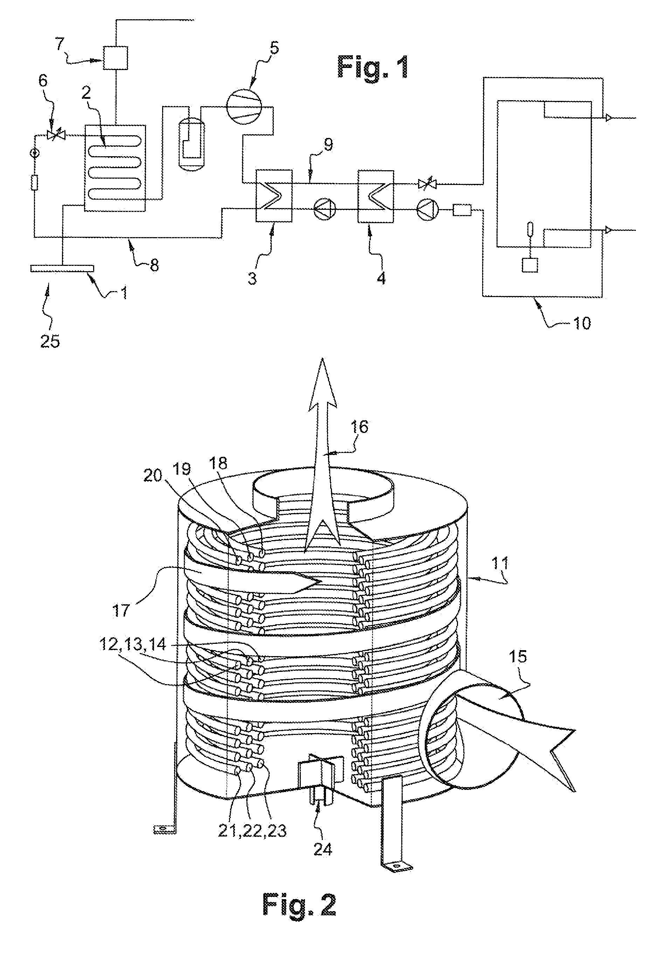

La figure 1 est une représentation schématique de l'installation de l'invention équipée d'un ballon d'eau chaude sanitaire.

L'installation comprend essentiellement 7 éléments, respectivement :
- 1 dispositif de captage tel qu'une hotte (1)
- 3 échangeurs (2, 3, 4),
- 1 compresseur (5),
- 1 détendeur (6),
- 1 extracteur d'air (7)

Bien entendu, l'installation comprend également l'ensemble des éléments propres aux pompes à chaleur, en l'espèce les soupapes de sécurité, vannes d'isolement, de même et surtout réservoir de liquide et déshydrateur.

Selon l'invention, l'installation comprend trois circuits distincts que sont :
- un premier circuit (8) correspondant à une pompe à chaleur intégrant le premier échangeur,
- un second circuit (9) entre le second échangeur (3) et le troisième échangeur (4).
- un troisième circuit (10) permettant de chauffer l'eau d'un ballon d'eau chaude sanitaire, d'un plancher chauffant basse température ou encore d'une dalle chauffante. Cette eau peut également servir à préchauffer de l'air introduit dans une pièce.

Sur la figure 2 est représentée une vue éclatée du premier échangeur selon l'invention.

Comme le montre cette figure, le premier échangeur (2) est constitué d'une cuve cylindrique (11) à l'intérieur de laquelle sont agencés trois serpentins tubulaires concentriques (12, 13, 14) disposés de manière contigüe, à proximité de la paroi interne du cylindre (11). Cet échangeur est en outre muni, au niveau de sa partie basse, d'une entrée d'air (15) et à sa partie supérieure radiale, d'une sortie (16) de l'air traité. La flèche (17) simule le mouvement de l'air dans l'échangeur, à savoir un mouvement ascendant de bas en haut de manière cyclonique entre la paroi du cylindre (11) et les serpentins (12, 13, 14). Le mouvement de l'air se fait à contre-courant de l'écoulement du fluide caloporteur, en l'espèce du liquide comprimé basse pression entre les extrémités supérieures (18, 19, 20) des serpentins et les extrémités inférieures (21, 22, 23). Comme le montre la figure, l'échangeur est en outre muni à son point le plus bas d'un moyen (24) d'écoulement des condensats..

En pratique, l'air chaud (25) chargé en graisse extrait par le dispositif de captage (1) entre dans l'échangeur par l'ouverture (15). La force centrifuge générée grâce à la mise en oeuvre du ventilateur d'extraction (7) permet de séparer les particules solides et les gouttelettes. Les particules sont plaquées sur la paroi (11). La condensation de l'air au contact des serpentins entraîne la formation d'un film d'eau s'écoulant sur la paroi (11) entraînant de fait l'ensemble des particules solides. Les particules sont ainsi évacuées au point bas (24) de l'échangeur.

La conformation spécifique de cet échangeur permet donc de condenser de manière efficace les particules solides contenues dans les fumées et en particulier les graisses contenues dans les fumées de cuisine. La condensation permet en outre d'éliminer la majorité des odeurs. Cette efficacité est le résultat du phénomène de condensation intervenant grâce à la combinaison de trois serpentins tubulaires agencés de manière concentrique à la périphérie de l'échangeur, du mouvement cyclonique de l'air et du passage à contre-courant du liquide basse pression de haut en bas et de l'air chargé en graisses de bas en haut.

L'installation fonctionne ainsi de la manière suivante.

L'air chaud chargé en graisses (25), après passage dans la hotte (1), parvient à l'extrémité inférieure du premier échangeur (2). Cet air chargé en graisses présente en pratique une température comprise entre 20 et 45°C. Cet air, au contact des tubulures en serpentins, dans lequel circule un liquide comprimé basse pression d'une température d'environ 18°C, est dépollué. Plus précisément, les particules solides sont séparées de la partie gazeuse qui vient se condenser au contact des tubulures. Ce contact, avec de l'air chaud, permet de réchauffer le liquide comprimé basse pression circulant dans les serpentins à une température d'environ 18°C. L'air traité est ensuite évacué par l'extracteur (7).

Le fluide frigorigène basse pression est ensuite traité au sein d'un compresseur pour passer à une pression de l'ordre de 19 bar, permettant ainsi d'obtenir une température de 65°C.

La troisième étape consiste à condenser le gaz comprimé haute pression au niveau du second échangeur. Cette transformation permet d'une part, de transformer le gaz haute pression en liquide comprimé basse pression, et d'autre part, de transférer les calories dégagées à un liquide circulant à contre-courant au sein d'un troisième échangeur. Le liquide condensé au niveau du circuit no. 8 est ensuite détendu de sorte à être transformé en liquide comprimé basse pression. C'est ce liquide comprimé basse pression qui est ensuite réintroduit dans le premier échangeur. Le liquide circulant entre le deuxième échangeur (3) et le troisième échangeur (4) a une température comprise entre 10 °C et 65°C. Les calories de ce liquide sont ensuite utilisées au niveau du troisième échangeur pour venir chauffer un liquide circulant dans le circuit (10) qui peut être, comme déjà dit, de n'importe quelle nature, ballon d'eau chaude sanitaire...

En d'autres termes, l'installation de l'invention permet non seulement de dépolluer l'air de toutes les particules qu'il pourrait contenir, et en particulier les graisses, mais également et surtout de récupérer les calories générées, pour le chauffage d'eau ou le préchauffage d'air susceptible d'être utilisé pour des installations parallèles telles que déjà décrites, à savoir ballon d'eau chaude, plancher chauffant, préchauffage d'air neuf ou encore dalle chauffant

## Revendications

1. Installation pour la récupération de l'énergie contenue dans l'air vicié, en particulier celui extrait des cuisines professionnelles, qui se **caractérise en ce qu'**elle comprend successivement :
- un dispositif de captage (1) de l'air vicié,
- un premier échangeur (2) air/liquide comprimé basse pression apte à assurer la condensation de l'air vicié et le transfert des calories au liquide comprimé basse pression, ledit premier échangeur se présentant sous la forme d'une cuve cylindrique (11) renfermant un échangeur tubulaire se présentant sous la forme d'au moins un serpentin (12, 13, 14) agencé à proximité de la paroi de la cuve, la cuve étant munie d'une entrée tangentielle (15), avantageusement en partie basse de l'air vicié et d'une sortie radiale (16) avantageusement en partie haute de l'air traité, l'échangeur étant connecté à ses deux extrémités à un circuit de fluide caloporteur (8) circulant de l'extrémité supérieure à l'extrémité inférieure, le fluide passant de l'état liquide comprimé basse pression à l'état gaz comprimé basse pression,
- un compresseur (5) assurant la transformation du gaz comprimé basse pression en gaz comprimé haute pression,
- un second échangeur (3) assurant la transformation du gaz comprimé haute pression en liquide comprimé haute pression et le transfert de calories à un fluide caloporteur circulant dans un dispositif de chauffage (10),
- un détendeur (6) assurant la transformation du liquide comprimé haute pression en liquide comprimé basse pression alimentant le premier échangeur (3).

2. Installation selon la revendication 1, **caractérisée en ce qu'**elle contient un troisième échangeur (4) assurant le transfert de calories provenant du fluide caloporteur circulant dans le second échangeur (3) à un fluide circulant dans le dispositif de chauffage (10).

3. Installation selon la revendication 1, **caractérisée en ce que** le second échangeur (3) est un échangeur eau/eau ou eau/air.

4. Installation selon la revendication 1, **caractérisée en ce que** le troisième échangeur (4) est un échangeur eau/eau ou eau/air.

5. Installation selon la revendication 1, **caractérisée en ce que** le dispositif de chauffage (10) se présente sous la forme d'une dalle chauffante, d'un plancher chauffant basse température, d'un système de préchauffage d'air ou encore d'un ballon d'eau chaude sanitaire.

6. Installation selon la revendication 1, **caractérisée en ce que** le fluide caloporteur circulant dans le premier échangeur (2) est un fluide frigorigène, en particulier du R134A.

7. Installation selon la revendication 1, **caractérisée en ce que** le premier échangeur (2) est raccordé sur un ventilateur d'extraction (7), sous la forme d'une tourelle ou d'un caisson.

8. Installation selon la revendication 1, **caractérisée en ce que** le premier échangeur (2) présente, à son point bas, un moyen d'évacuation des condensats (24).

9. Procédé de traitement d'air chaud chargé en graisse mettant en oeuvre l'installation objet de l'une des revendications 1 à 8 selon lequel :
- on extrait l'air vicié au moyen du dispositif de captage (1),
- on condense l'air chaud dans le premier échangeur (2) tout en échangeant ses calories avec le liquide basse pression circulant dans l'échangeur tubulaire,
- on évacue l'air traité
- parallèlement on compresse le gaz basse pression,
- au niveau du second échangeur (3), on condense le gaz haute pression obtenu tout en échangeant ses calories avec un fluide, en pratique de l'eau ou de l'air circulant à contre courant dans le dispositif de chauffage (10),
- on détend le liquide haute pression obtenu par condensation du gaz haute pression pour alimenter le premier échangeur (2) en liquide compressé basse pression,
- parallèlement, le cas échéant, on échange les calories entre le fluide circulant dans le troisième échangeur (4) lorsqu'il est présent et le fluide circulant à contre courant provenant du second échangeur (2).

10. Procédé selon la revendication 9, **caractérisé en ce que** :
- la pression du liquide basse pression est comprise entre 2 et 6 bar,
- la pression du gaz haute pression est comprise entre 6 et 24 bar,
- la température de l'air chaud est comprise entre 20 et 45°C,
- la température du liquide haute pression obtenu après condensation du gaz haute pression est comprise entre 20 et 65°C,
- la température du fluide circulant à contre courant dans le second échangeur est comprise entre 10 et 65°C,
- la température du fluide circulant dans le troisième échangeur lorsqu'il est présent est comprise entre 10 et 65°C.
